# EUROPÄISCHE PATENTSCHRIFT

(11) **EP 3 424 136 B1**
(45) Veröffentlichungstag und Bekanntmachung des Hinweises auf die Patenterteilung: **30.12.2020**
(21) Anmeldenummer: 17708489.4
(22) Anmeldetag: 02.03.2017
(51) Int. Cl.: B66B 11/04

(54) **LINEARMOTORANORDNUNG FÜR EINE AUFZUGSANLAGE**
LINEAR MOTOR ARRANGEMENT FOR AN ELEVATOR
AGENCEMENT DE MONTAGE D'UN MOTEUR LINÉAIRE POUR ASCENSEUR

(30) Priorität: 04.03.2016 DE 102016203570
(43) Veröffentlichungstag der Anmeldung: 09.01.2019
(73) Patentinhaber: thyssenkrupp Elevator Innovation and Operations AG, 45143 Essen (DE)
(72) Erfinder: MADERA, Martin, 73765 Neuhausen (DE); KIRSCH, Michael, 73230 Kirchheim unter Teck (DE); KUCZERA, Thomas, 70771 Leinfelden-Echterdingen (DE); LOVRIC, Markan, 70180 Stuttgart (DE); KRIEG, Martin, 76571 Gaggenau (DE); GRIESARDT, Sebastian, 76467 Bietigheim (DE); BINZ, Fabian, 76571 Gaggenau (DE); ZERELLES, Holger, 70771 Leinfelden-Echterdingen (DE); SMITH, Rory, El Cajon California 92019 (US)
(74) Vertreter: Jacobi, Nicolas
(86) Internationale Anmeldenummer: PCT/EP2017/054879
(87) Internationale Veröffentlichungsnummer: WO 2017/149066

(56) Entgegenhaltungen:
- EP-A1- 0 846 646
- EP-A1- 0 846 646
- EP-A1- 0 858 965
- EP-A1- 0 858 965
- CN-A- 103 303 769
- CN-A- 103 303 769
- DE-A1- 2 511 139
- DE-A1- 2 511 139
- DE-A1-102009 014 497
- DE-A1-102009 014 497
- DE-A1-102013 014 248
- DE-A1-102013 014 248
- DE-T5-112005 001 932
- DE-T5-112005 001 932

## Beschreibung

Die Erfindung betrifft eine Aufzugsanlage. Eine solche Aufzugsanlage umfasst zumindest einen Fahrkorb, der entlang eines Fahrweges verfahrbar ist. Die Linearmotoranordnung ist geeignet, diesen Fahrkorb in Richtung des Fahrweges anzutreiben.

Solche Linearmotoren kommen insbesondere bei Aufzugsanlagen zum Einsatz, deren Antrieb ohne Antriebsseil erfolgt. Entlang des Fahrweges des Fahrkorbs ist eine Mehrzahl von Statoreinheiten des Linearmotors übereinander angebracht, welche ein mit dem Fahrkorb mitwanderndes Magnetfeld erzeugen. Eine am Fahrkorb fest angebrachte Läufereinheit wird durch das wandernde Magnetfeld beaufschlagt, so dass der Fahrkorb angetrieben wird. Aufzugsanlagen mit Linearmotorenanordung sind auch aus EP0846646A1 und EP0858965A1 bekannt.

Derzeit geht die Entwicklung hin zu sogenannten Multi-Systemen, bei denen eine Mehrzahl von Fahrkörben in einem gemeinsamen Aufzugsschacht verfahrbar aufgenommen sind. Insbesondere wenn die Aufzugssysteme neben dem vertikalen Verfahrweg auch ein seitliches Verfahren der Fahrkörbe vorsehen, sind besondere Lagerungskonzepte anzuwenden. Insbesondere kommen hier sogenannte Rucksack-Aufhängungen zur Anwendung, bei denen die Fahrkorbführungsrollen, also diejenigen Rollen, die den Fahrkorb führen, außerhalb des Grundrisses des Fahrkorbs auf einer Seite des Fahrkorbs angeordnet sind. Daraus ergeben sich enorme Kippmomente, die auf das Führungssystem und den Fahrkorb wirken und dort Verschleiß und Verformungen hervorrufen.

Zugleich ist der Wirkungsgrad des Linearmotors in hohem Maß abhängig von der Breite des Spaltes zwischen den Magneten der Statoreinheit und der Läufereinheit. Die auftretenden Verformungen an Führungssystem und Fahrkorb wirken sich entsprechend nachteilig auf die Relativposition zwischen Statoreinheit und der Läufereinheit aus.

Aufgabe der vorliegenden Erfindung ist es, eine verbesserte Linearmotoranordnung bereitzustellen, die insbesondere robust ist gegenüber den hohen Kippmomenten und daraus resultierenden Verformungen und Verschleißerscheinungen von Rucksack-gelagerten Fahrkörben.

Die der Erfindung zugrunde liegende Aufgabe wird gelöst durch eine Aufzugsanlage nach Anspruch 1; bevorzugte Ausgestaltungen ergeben sich aus den Unteransprüchen sowie der nachfolgenden Beschreibung.

Die Aufzugsanlage mit einer Linearmotoranordnung umfasst eine Läufereinheit mit zumindest einem Läufermagneten, eine Statoreinheit mit mehreren entlang des Fahrweges angeordneten Statormagneten, und zumindest eine Befestigungseinheit zur Antriebsverbindung der Läufereinheit mit dem Fahrkorb. Die Statormagneten sind eingerichtet, ein entlang des Fahrweges wanderndes Magnetfeld zu erzeugen, mit welchem der zumindest eine Läufermagnet zum Zwecke des Antreibens der Läufereinheit magnetisch beaufschlagt wird.

Erfindungsgemäß ist die Läufereinheit durch die Befestigungseinheit zumindest in Fahrtrichtung betrachtet fest verbunden, und die Befestigungseinheit ist derart ausgebildet, dass eine Relativbewegung zwischen der Läufereinheit und dem Fahrkorb in einer Richtung quer zur Fahrtrichtung ermöglicht ist. Die feste Verbindung in Fahrtrichtung ermöglicht, dass die Antriebskraft auf die Kabine übertragen werden kann. Die fest Verbindung kann aber ein elastisches Element umfassen, welches z.B. eine Dämpfung von Antriebskraftspitzen bereitstellen kann.

Der Vorteil dieser Anordnung liegt nun darin, dass die Ausrichtung von Statormagneten und Läufermagneten zueinander weitgehend entkoppelt ist von der Führung des Fahrkorbs an dem Fahrkorbführungssystem, umfassend insbesondere Fahrkorbführungsrollen und Fahrkorbführungsschienen. Etwaige Fehlausrichtungen der Fahrkorbführungsschienen gegenüber der Statoreinheiten können durch die bewegliche Lagerung quer zur Fahrtrichtung ausgeglichen werden und müssen sich nicht auf die Dimension des Luftspaltes zwischen den Magneten auswirken. Auch Verformungen am Fahrkorb, die sich durch die enormen Kippmomente durch eine etwaige Rucksack-Lagerung ergeben, beeinflussen den Luftspalt nicht mehr zwangsläufig.

Vorzugsweise umfasst die Linearmotoranordnung einen Führungsmechanismus, welcher eine definierte Ausrichtung der Läufereinheit gegenüber der Statoreinheit ermöglicht. Ausgestaltungen geeigneter Führungsmechanismen werden im Laufe der Beschreibung näher erläutert.

Vorzugsweise umfasst die Befestigungseinheit eine Schiebeeinheit, welche derart eingerichtet ist, dass über die Befestigungseinheit die Läufereinheit in Richtung des Fahrweges, insbesondere weitgehend vertikal, fest aber quer zur Richtung des Fahrweges, insbesondere horizontal beweglich mit dem Fahrkorb verbunden ist. Bei sogenannten Multi-Systemen kann die Fahrtrichtung auch von der vertikalen Richtung abweichen; die Fahrtrichtung kann insbesondere bei einem Umsetzen des Fahrkorbs von einem Aufzugsschacht in den nächsten Aufzugsschacht horizontal verlaufen. Der Begriff weitgehend vertikal berücksichtigt dabei, der Verlauf auch leichte Krümmungen aufweisen kann, wie anhand der Figuren noch erläutert wird.

Dabei ist es vorzugsweise vorgesehen, dass die Befestigungseinheit, insbesondere die Schiebeeinheit, derart ausgebildet ist, eine freie Bewegung der Läufereinheit gegenüber dem Fahrkorb in einer Verschieberichtung zu ermöglichen, die im Wesentlichen senkrecht zur Fahrtrichtung ausgerichtet ist. Es werden somit zwei Verschiebefreiheitsgrade bereitgestellt. Durch ein Verschieben entlang eines ersten der Freiheitsgrade (x-Richtung) wird der Läufermagnet parallel zum Luftspalt relativverschoben, ohne Auswirkung auf die Luftspaltbreite; durch ein Verschieben entlang eines zweiten der Freiheitsgrade (y-Richtung) wird der Läufermagnet quer zum Luftspalt relativverschoben, was einen unmittelbaren Einfluss auf die Luftspaltbreite hat.

Vorzugsweise umfasst die Befestigungseinheit eine Gelenkeinheit, welche derart angeordnet ist, dass über die Befestigungseinheit die Läufereinheit drehbar mit dem Fahrkorb verbunden ist. Die drehbare Verbindung erfolgt insbesondere über eine Drehachse, die quer zur Fahrtrichtung des Fahrweges ausgerichtet ist und/oder die parallel zum Luftpalt ausgerichtet ist. Durch die Drehbarkeit ist es strenggenommen möglich, dass die o.g. Verschieberichtung zweitweise nun nicht mehr exakt quer zur Fahrtrichtung ausgerichtet ist. Da im realen Betrieb aber nur von Auslenkungen von wenigen Winkel-Graden zu rechnen ist, wird eine nicht exakt senkrechte Ausrichtung zwischen Verschieberichtung und Fahrtrichtung auch als quer bezeichnet.

Vorzugsweise ist dabei die Schiebeeinheit zwischen der Gelenkeinheit und der Läufereinheit angeordnet. Dadurch kann sichergestellt werden, dass die Richtung der magnetischen Beaufschlagung auf den Läufermagneten stets parallel zur Verschieberichtung ist, selbst wenn der Läufermagnet durch Verdrehung an der Gelenkeinheit aus der exakt senkrechten Ausrichtung (relativ zur Fahrtrichtung) ausgeschwenkt ist. Damit werden solche Kraftkomponenten aus dem Linarmtotor selbst, die ein Verschieben der Schiebeeinheit in Verschieberichtung bewirken könnten, vermieden. Grundsätzlich ist eine Anordnung derart, dass die Gelenkeinheit zwischen der Schiebeeinheit und der Läufereinheit angeordnet ist, auch möglich, insbesondere wenn lediglich geringe Winkeländerungen zu erwarten sind.

Vorzugsweise umfasst die Läufereinheit einen Läuferrahmen, welcher mittels Führungsmittel, insbesondere unmittelbar, gegenüber einem Statorrahmen der Statoreinheit geführt ist. Ein solcher Rahmen dient dabei zur Aufnahme der jeweils zugeordneten Magnete, nämlich der Läufermagnete bzw. der Statormagnete. Insbesondere sind die jeweiligen Magnete in dem zugehörigen Rahmen in einer definierten Position und Ausrichtung gehalten. Durch die Führung des Läuferrahmens gegenüber dem Statorrahmen kann somit der Läufermagnet gegenüber dem Statormagnet in gewünschter Ausrichtung gehalten werden. Die Toleranzkette zur Einhaltung einer gewünschten Spaltbreite kann so auf wenige Bauteile reduziert werden.

Vorzugsweise werden als Führungsmittel Läuferführungsrollen verwendet, die insbesondere am Läuferrahmen angebracht sind und auf einer Führungsfläche am Statorrahmen abrollen.

Es sind insbesondere erste Führungsmittel, insbesondere erste Läuferführungsrollen, vorgesehen, die die eine Führung des Läuferrahmens gegenüber dem Statorrahmen in einer ersten Richtung (y-Richtung) quer zur Fahrrichtung sicherstellen, wodurch insbesondere eine vordefinierte Spaltbreite unterstützt wird.

Insbesondere soll während des Betriebs die Spaltbreite auf +/- 4mm konstant gehalten werden. Insbesondere bei Rucksacklagerungen ist dies anderweitig lediglich durch eine sehr starr ausgebildete Strukturbauteile möglich, was zwangsläufig zu einem hohen Gewicht führt.

Es sind insbesondere zweite Führungsmittel, insbesondere zweite Läuferführungsrollen, vorgesehen, die eine Führung des Läuferrahmens gegenüber dem Statorrahmen in einer zweiten Richtung (x-Richtung) quer zur Fahrrichtung sicherstellen, wodurch insbesondere eine vordefinierte Eintauchtiefe der Läufereinheit in die Statoreinheit unterstützt wird.

Vorzugsweise ist ein Stellantrieb zum definierten Einstellen der Relativbewegung zwischen der Läufereinheit und dem Fahrkorb in der Richtung quer zur Fahrtrichtung vorgesehen. Durch den Stellantrieb lässt sich die Spaltbreite definiert einstellen und/oder auf einen gewünschten Sollwert regeln. Dabei wird die bewegliche Lagerung der Läufereinheit gegenüber dem Fahrkorb ausgenutzt, die den erforderlichen Freiheitsgrad zum Einstellen gewährleistet.

Vorzugsweise ist dafür eine Steuereinheit zur Ansteuerung des Stellantriebs vorgesehen. Die Steuereinheit ist eingerichtet, eine Spaltbreite zwischen einem der Läufermagnete und einem der Statormagnete entsprechend einem Vorgabewert einzuregeln. Vorzugsweise bedient sich die Steuereinheit eines Sensormittels zur Ermittlung einer Spaltbreite zwischen einem der Läufermagnete und einem der Statormagnete.

Die vorgenannten Führungsmechanismen ermöglichen es, eine gewünschte Spaltbreite einzuhalten, wobei ein Einfluss durch Kippmomente und Verschleiß auf die Spaltbreite unterbunden wird.

Vorzugsweise umfasst die Linearmotoranordnung Sensormittel zur Bestimmung der Position des zumindest eines Läufermagneten entlang des Fahrweges, wobei insbesondere eine Mehrzahl von ersten Sensormitteln entlang des Fahrweges an den Statoreinheiten angebracht sind, und zumindest ein zweites Sensormittel an der Läufereinheit angebracht ist. Diese Sensoreinheit kann zum einen zur Ermittlung der Position des Fahrkorbs im Aufzugsschacht dienen. Dies ist insbesondere bedeutsam für die Aufzugsteuerung, insbes. für die übergeordnete Regelung der Geschwindigkeitsprofils des Fahrkorbs. Zum anderen kann diese Sensoreinheit verwendet werden zur Ermittlung der exakten Position des Läufermagneten relativ zu den Statormagneten, was wiederum bedeutsam ist für die untergeordnete Regelung des Linearmotors, insbesondere in Synchronbauweise. Derzeit kostengünstig erhältliche berührungslose Sensormittel zur Positions- und Wegmessung verlangen die Einhaltung eines vorgegebenen Abstandes zueinander, um die Position möglichst exakt ermitteln zu können. Zur Einhaltung dieses vorgegebenen Abstandes können insbesondere die o.g. Führungsmechanismen verwendet werden, so dass sich hieraus ein Synergieeffekt ergibt.

Die Erfindung ist insbesondere anwendbar in einer Aufzugsanlage, umfassend einen Fahrkorb, welcher entlang eines Fahrweges verfahrbar ist, sowie eine Linearmotoranordnung der oben beschriebenen Art. Die Aufzugsanlange umfasst insbesondere eine Vielzahl, insbesondere mehr als zwei, Fahrkörbe, die unabhängig voneinander auf dem gemeinsamen Fahrweg verfahrbar sind. Insbesondere sind für jeden Fahrkorb zumindest zwei Linearmotoranordnungen der beschriebenen Art vorgesehen, wobei jede der Linearmotoranordnungen eine separate Befestigungseinheit zur Befestigung der jeweiligen Läufereinheit mit dem Fahrkorb umfasst.

Insbesondere ist der Begriff Fahrkorb im Rahmen der vorliegenden Erfindung breit zu verstehen und umfasst auch eine Anordnungen mit einer Kabine und einem dazu separat ausgebildeten Fahrschlitten, der an den Führungsschienen geführt ist. Die Kabine kann drehbar an dem Fahrschlitten befestigt sein.

### Kurze Beschreibung der Zeichnungen

Im Folgenden wird die Erfindung anhand von schematischen Zeichnungen näher erläutert. Im Einzelnen zeigen:
Fig. 1 ausschnittsweise eine erfindungsgemäße Aufzugsanlage mit einer Linearantriebsanordnung in Draufsicht;
Fig. 2 ausschnittsweise die Schiebegelenkeinheit der Anordnung nach Figur 1 in Schnittdarstellung entsprechend der Schnittlinie II-II;
Fig. 3 ausschnittsweise eine erfindungsgemäße Aufzugsanlage mit einer Linearantriebsanordnung in Draufsicht;
Fig. 4 ausschnittsweise die Schiebegelenkeinheit der Anordnung nach Figur 3 in Schnittdarstellung entsprechend der Schnittlinie IV-IV;
Fig. 5 ausschnittsweise die Schiebeeinheit mit Stellantrieb der Anordnung nach Figur 3 in Draufsicht;
Fig. 6 ausschnittsweise die Magnete mit Abstandssensor der Anordnung nach Figur 3 in Draufsicht;
Fig. 7 die Aufzugsanlage nach Figur 1 in Vorderansicht mit einer Linearantriebsanordnung in Frontalansicht.
Fig. 8 die Aufzugsanlage nach Figur 1 in Vorderansicht mit zwei übereinander angeordneten Linearantriebsanordnungen.

### Beschreibung der bevorzugten Ausführungsformen

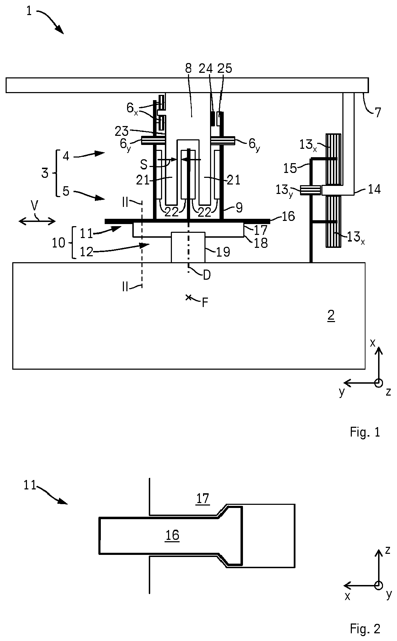

Figur 1 zeigt einen Ausschnitt einer ersten erfindungsgemäßen Aufzugsanlage 1. Die Aufzugsanlage 1 umfasst einen Fahrkorb 2, der innerhalb eines Aufzugsschachtes 7 (visualisiert durch einen Teil der Schachtwand) vertikal verfahrbar aufgenommen ist. Innerhalb des Aufzugsschachtes 7 wird ein Fahrweg F (senkrecht aus der Bildebene heraus) durch eine Anzahl von Fahrkorbführungsschienen 14 definiert. Am Fahrkorb 2 sind Fahrkorbführungsrollen 13 drehbar an einem Rollenträger 15 befestigt, die an den Fahrkorbführungsschienen 14 abrollen. Im vorliegenden Fall ist die Aufzugsanlage in sogenannter "Rucksackbauweise" ausgeführt, bei der die Fahrkorbführungsrollen 13 allesamt auf einer Seite außerhalb des Grundrisses des Fahrkorbs 2 angeordnet sind, wodurch sich ein abzustützendes Kippmoment auf einen Teil der Fahrkorbführungsrollen 13ₓ ergibt. Die das Kippmoment aufnehmenden Fahrkorbführungsrollen 13ₓ und die Fahrkorbführungsschienen 14 sind derart angeordnet, dass das Kippmoment radial auf diese Fahrkorbführungsrollen 13ₓ wirkende Stützkräfte erzeugt. Hieraus ergeben sich bereits große Kräfte, welche die Fahrkorbführungsrollen 13 und die Fahrkorbführungsschienen 14 beaufschlagen und dabei Verformungen und Verschleiß hervorrufen. Die Führung über die Fahrkorbführungsschienen und die Fahrkorbführungsrollen ist dabei nur über ein großes Toleranzband möglich. In der Figur 1 ist lediglich eine Fahrkorbführungsschiene 14 mit zugehörigen Fahrkorbführungsrollen 13 auf der rechten Seite gezeigt; auf der linken Seite des Fahrkorbs 2 ist eine weitere Fahrkorbführungsschiene mit zugehörigen Fahrkorbführungsrollen vorhanden, welche aber aus Gründen der Übersichtlichkeit nicht gezeichnet sind.

Angetrieben wird der Fahrkorb 2 seillos über eine Linearmotoranordnung mit einem Linearmotor 3, welcher ausgeführt als Synchronmotor ist. Der Linearmotor 3 umfasst mehrere Statoreinheiten 4, die übereinander am Aufzugsschacht 7 angebracht sind, und eine Läufereinheit 5, die am Fahrkorb 2 angebracht ist. Eine Statoreinheit 4 umfasst jeweils Statormagnete 21, welche in Wechselwirkung mit Läufermagneten 22 der Läufereinheit 5 den Fahrkorb 2 antreiben. Die Vielzahl der Statormagnete 21 erzeugt dabei ein entlang des Fahrweges F wanderndes Magnetfeld, welches die jeweils zugeordneten Läufermagnete 22 mit sich mitführt. In einer Ausgestaltung sind die Statormagnete 21 durch Elektromagnete gebildet; die Läufermagnete 22 können als Permanentmagnete ausgeführt sein.

Zwischen den Statormagneten 21 und den zugeordneten Läufermagneten 22 ist jeweils ein Luftspalt S gebildet. Aus Gründen der Übersichtlichkeit ist hier die Luftspaltbreite S für lediglich ein Magnetpaar 21, 22 eingezeichnet. Der Wirkungsgrad des Linearmotors 3 hängt entscheidend von der Dimension des Luftspalts S ab. Der Luftspalt S ist dabei so exakt wie möglich an einen Vorgabewert einzustellen. Ist der Luftspalt S zu groß, so sinkt der Wirkungsgrad des Linearmotors 3; ist der Luftspalt S zu klein, so können sich die Statormagnete 21 und die Läufermagnete 22 berühren, was die Funktion der Magnete 21, 22 reduzieren oder die Magnete 21, 22 sogar zerstören könnte. Aus oben genannten Gründen reicht eine Führung des Fahrkorbs 2 über die Fahrkorbführungsrollen 13 und die Fahrkorbführungsschienen 14 alleine nicht aus, um den Luftspaltbreite S verlässlich über einen längeren Wartungszeitraum auf dem gewünschten Wert zu halten.

Erfindungsgemäß ist nun vorgesehen, die Luftspaltbreite S unabhängig von den Fahrkorbführungsrollen 13 und den Fahrkorbführungsschienen 14 zu halten. Dafür ist eine Art schwimmende Lagerung zwischen der Läufereinheit 5 und dem Fahrkorb vorgesehen. Realisiert wird dies durch eine Befestigungseinheit in Form einer Schiebegelenkeinheit 10, die zum einen an einem Läuferrahmen 9 der Läufereinheit 5 und zum anderen am Fahrkorb 2 befestigt ist.

Die Schiebegelenkeinheit 10 umfasst eine Schiebeeinheit 11 mit einem ersten Schiebeelement 16 und einem zweiten Schiebeelement 17 sowie eine Gelenkeinheit 12 mit einem ersten Gelenkelement 18 und einem zweiten Gelenkelement 19. Das erste Schiebeelement 16 ist an dem Läuferrahmen 9 befestigt; das zweite Schiebeelement 17 ist fest mit dem ersten Gelenkelement 18 verbunden; das erste Gelenkelement 18 ist um eine Drehachse D drehbar mit dem zweiten Gelenkelement 19 verbunden; das zweite Gelenkelelement 19 ist an dem Fahrkorb 2 befestigt. Das erste Schiebeelement 16 ist verschiebbar gegenüber dem zweiten Schiebeelement 17 gehalten und zwar in einer Verschieberichtung V, die quer zur Richtung des Fahrwegs F ausgerichtet ist. Bedeutsam ist, dass die Verschieberichtung der Schiebeeinheit 11 insbesondere parallel ausgerichtet ist zur Richtung des Luftspalts S (y-Richtung), dessen Spaltbreite S innerhalb enger Vorgabewerte zu halten ist. Ein Verschieben des ersten Schiebeelements 16 gegenüber dem zweiten Schiebeelement 17 in Verschieberichtung V (in y-Richtung) wirkt sich unmittelbar auf die Luftspaltbreite S aus. Im vorliegenden Beispiel ist die Verschieberichtung V zudem weitgehend parallel zu den Achsen der Fahrkorbführungsrollen 13ₓ, welche das Kippmoment abstützen.

In Figur 2 ist die Schiebeeinheit 11 in Schnittdarstellung näher dargestellt. Das erste Schiebelement 16 ist in einer Öffnung des zweiten Schiebeelements 17 gehalten. Das erste Schiebeelement lässt sich hierbei frei in einer Ebene (x-y-Ebene) gegenüber dem zweiten Schiebeelement 17 verschieben, die senkrecht zur Fahrtrichtung (z-Richtung) steht. Eine Relativverschiebung ist sowohl in x-Richtung als auch in y-Richtung möglich. Eine Relativverschiebung in y-Richtung wirkt sich unmittelbar auf die Spaltbreite S aus; eine Relativverschiebung in x-Richtung bewirkt ein tieferes Eintauchen des Läuferrahmens 9 in den Statorrahmen8 hinein bzw. aus diesem heraus.

In der Ausgestaltung nach Figur 1 wird die korrekte relative Ausrichtung zwischen der Läufereinheit 5 und der Statoreinheit 4 sichergestellt durch Führungsmittel 6, im vorliegenden Ausführungsbeispiel in Form von ersten Läuferführungsrollen 6_{y}, die drehbar am Läuferrahmen 9 gehalten sind und deren Achsen senkrecht zur Richtung des Luftspaltes S stehen. Diese ersten Läuferführungsrollen 6_{y} rollen auf Führungsflächen 23, die am Statorrahmen 8 gebildet sind. Durch eine recht kurze Toleranzkette umfassend den Läuferrahmen 9, die ersten Läuferführungsrollen 6_{y}, den Statorrahmen 8 mitsamt der Führungsfläche 23 sowie der Anbindung der Magnete 21, 22 an den jeweiligen Rahmen 8, 9 wird es nun möglich, einen gewünschte Luftspaltbreite S einzustellen und während des Betriebs aufrecht zu erhalten. Ferner sind weitere zweite Läuferführungsrollen 6ₓ vorgesehen, durch welche eine vorgegebene Eintauchtiefe des Läufers in den Stator hinein eingehalten wird.

Die Schiebeeinheit 11 ermöglicht nun, dass die horizontale Position des Läuferrahmens 9 an der horizontalen Position des Statorrahmens 8 ausgerichtet werden kann. Die Gelenkeinheit 12 ermöglicht zudem eine Winkelausrichtung des Läuferrahmens 9 an einen etwaigen krummen Verlauf der Statoreinheiten 4 entlang des Fahrweges F.

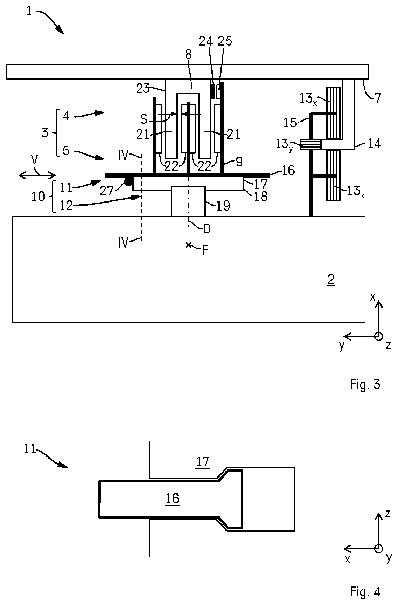

Figur 3 zeigt einen Ausschnitt einer zweiten erfindungsgemäßen Aufzugsanlage 1. Die Aufzugsanlage 1 umfasst einen Fahrkorb 2, der innerhalb eines Aufzugsschachtes 7 (visualisiert durch einen Teil der Schachtwand) vertikal verfahrbar aufgenommen ist. Innerhalb des Aufzugsschachtes 7 wird ein Fahrweg F (senkrecht aus der Bildebene heraus) durch eine Anzahl von Fahrkorbführungsschienen 14 definiert. Am Fahrkorb 2 sind Fahrkorbführungsrollen 13 drehbar an einem Rollenträger 15 befestigt, die an den Fahrkorbführungsschienen 14 abrollen. Im vorliegenden Fall ist die Aufzugsanlage in sogenannter "Rucksackbauweise" ausgeführt, bei der die Fahrkorbführungsrollen 13 allesamt auf einer Seite außerhalb des Grundrisses des Fahrkorbs 2 angeordnet sind, wodurch sich ein abzustützendes Kippmoment auf einen Teil der Fahrkorbführungsrollen 13ₓ ergibt. Die das Kippmoment aufnehmenden Fahrkorbführungsrollen 13ₓ und die Fahrkorbführungsschienen 14 sind derart angeordnet, dass das Kippmoment radial auf diese Fahrkorbführungsrollen 13ₓ wirkende Stützkräfte erzeugt. Hieraus ergeben sich bereits große Kräfte, welche die Fahrkorbführungsrollen 13 und die Fahrkorbführungsschienen 14 beaufschlagen und dabei Verformungen und Verschleiß hervorrufen. Die Führung über die Fahrkorbführungsschienen und de Fahrkorbführungsrollen ist dabei nur über ein großes Toleranzband möglich. In der Figur 3 ist lediglich eine Fahrkorbführungsschiene 14 mit zugehörigen Fahrkorbführungsrollen 13 auf der rechten Seite gezeigt; auf der linken Seite des Fahrkorbs 2 ist eine weitere Fahrkorbführungsschiene mit zugehörigen Fahrkorbführungsrollen vorhanden, welche aber aus Gründen der Übersichtlichkeit nicht gezeichnet sind.

Angetrieben wird der Fahrkorb 2 seillos über eine Linearmotoranordnung mit einem Linearmotor 3, welcher ausgeführt ist als Synchronmotor. Der Linearmotor 3 umfasst mehrere Statoreinheiten 4, die übereinander am Aufzugsschacht 7 angebracht sind, und eine Läufereinheit 5, die am Fahrkorb 2 angebracht ist. Eine Statoreinheit 4 umfasst jeweils Statormagnete 21, welche in Wechselwirkung mit Läufermagneten 22 der Läufereinheit 5 den Fahrkorb 2 antreiben. Die Vielzahl der Statormagnete 21 erzeugt dabei ein entlang des Fahrweges F wanderndes Magnetfeld, welches die jeweils zugeordneten Läufermagnete 22 vor sich herführt. In einer Ausgestaltung sind die Statormagnete 21 durch Elektromagnete gebildet; die Läufermagnete 22 können als Permanentmagnete ausgeführt sein.

Zwischen den Statormagneten 21 und den zugeordneten Läufermagneten 22 ist jeweils ein Luftspalt S gebildet. Aus Gründen der Übersichtlichkeit ist hier die Luftspaltbreite S für lediglich ein Magnetpaar 21, 22 eingezeichnet. Der Wirkungsgrad des Linearmotors 3 hängt entscheidend von der Dimension des Luftspalts S ab. Der Luftspalt S ist dabei so exakt wie möglich an einen Vorgabewert einzustellen. Ist der Luftspalt S zu groß, so sinkt der Wirkungsgrad des Linearmotors 3; ist der Luftspalt S zu klein, so können sich die Statormagnete 21 und die Läufermagnete 22 berühren, was die Funktion der Magnete 21, 22 reduzieren oder die Magnete 21, 22 sogar zerstören könnte. Aus oben genannten Gründen reicht eine Führung des Fahrkorbs 2 über die Fahrkorbführungsrollen 13 und die Fahrkorbführungsschienen 14 alleine nicht aus, um den Luftspaltbreite S verlässlich über einen längeren Wartungszeitraum auf dem gewünschten Wert zu halten.

Erfindungsgemäß ist nun vorgesehen, die Luftspaltbreite S unabhängig von den Fahrkorbführungsrollen 13 und den Fahrkorbführungsschienen 14 zu halten. Dafür ist eine Art schwimmende Lagerung zwischen der Läufereinheit 5 und dem Fahrkorb vorgesehen. Realisiert wird dies durch eine Befestigungseinheit in Form einer Schiebegelenkeinheit 10, die zum einen an einem Läuferrahmen 9 der Läufereinheit 5 befestigt ist und zum anderen am Fahrkorb 2 befestigt ist.

Die Schiebegelenkeinheit 10 umfasst eine Schiebeeinheit 11 mit einem ersten Schiebeelement 16 und einem zweiten Schiebeelement 17 sowie eine Gelenkeinheit 12 mit einem ersten Gelenkelement 18 und einem zweiten Gelenkelement 19. Das erste Schiebeelement 16 ist an dem Läuferrahmen 9 befestigt; das zweite Schiebeelement 17 ist fest mit dem ersten Gelenkelement 18 verbunden; das erste Gelenkelement 18 ist drehbar um eine Drehachse D mit dem zweiten Gelenkelement 19 verbunden; das zweite Gelenkelelement 19 ist an dem Fahrkorb 2 befestigt. Das erste Schiebeelement 16 ist verschiebbar gegenüber dem zweiten Schiebeelement 17 gehalten und zwar in einer Verschieberichtung V, die quer zur Richtung des Fahrwegs F ausgerichtet ist. Bedeutsam ist, dass die Verschieberichtung der Schiebeeinheit 11 insbesondere parallel ausgerichtet ist zur Richtung des Luftspalts S (y-Richtung), dessen Spaltbreite S innerhalb enger Vorgabewerte zu halten ist. Ein Verschieben des ersten Schiebeelements 16 gegenüber dem zweiten Schiebeelement 17 in Verschieberichtung V (in y-Richtung) wirkt sich unmittelbar auf die Luftspaltbreite S aus. Im vorliegenden Beispiel ist die Verschieberichtung V zudem weitgehend parallel zu den Achsen der Fahrkorbführungsrollen 13ₓ, welche das Kippmoment abstützen.

In Figur 4 ist die Schiebeeinheit 11 in Schnittdarstellung näher dargestellt. Das erste Schiebelement 16 ist in einer Öffnung des zweiten Schiebeelements 17 gehalten. Das erste Schiebeelement 16 lässt sich hierbei frei in einer Ebene (x-y-Ebene) gegenüber dem zweiten Schiebeelement 17 verschieben, die senkrecht zur Fahrtrichtung (z-Richtung) steht. Eine Relativverschiebung ist sowohl in x-Richtung als auch in y-Richtung möglich. Eine Relativverschiebung in y-Richtung wirkt sich unmittelbar auf die Spaltbreite S aus; eine Relativverschiebung in x-Richtung bewirkt ein tieferes Eintauchen des Läuferrahmens 9 in den Statorrahmen8 hinein bzw. aus diesem heraus.

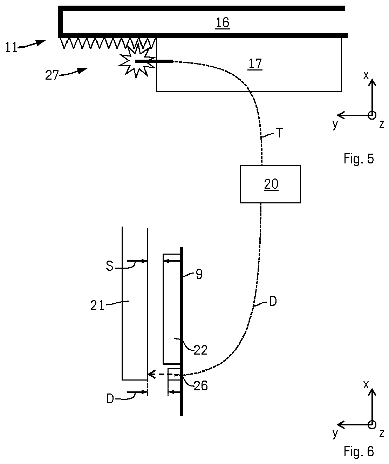

In der Ausgestaltung nach Figur 3 wird die Spaltbreite S aktiv geregelt. Hierzu ist ein Stellantrieb 27 vorgesehen, mit dem eine Verlagerung des ersten Schiebelements 16 gegenüber dem zweiten Schiebeelement 17 erzeugt werden kann (Figur 5). Ein, z.B. optisches, Abstandsmessgerät 26, misst an einer vordefinierten Stelle einen Abstand D zwischen Bereichen am Läuferrahmen 9 und am Statorrahmen 8, welcher in einem bekannten geometrischen Bezug zur Spaltbreite S steht. Eine Steuereinheit 20 berechnet hieraus eine Stellgröße T für den Stellantrieb 27 (Figur 6).

Die Schiebeeinheit 11 ermöglicht nun, dass die horizontale Position des Läuferrahmens 9 aktiv an der horizontalen Position des Statorrahmens 8 ausgerichtet werden kann. Die Gelenkeinheit 12 ermöglicht zudem eine Winkelausrichtung des Läuferrahmens 9 an einen etwaigen krummen Verlauf der Statoreinheiten 4 entlang des Fahrweges.

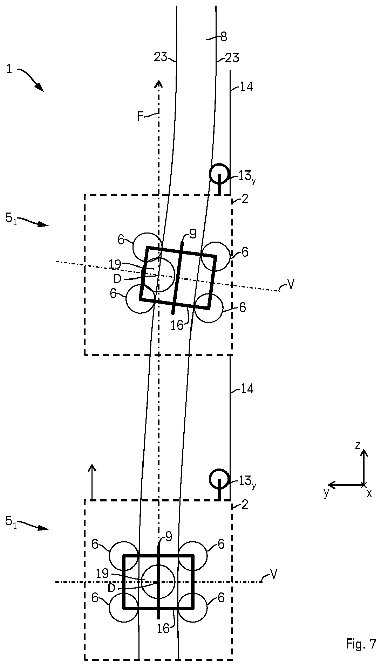

Figur 7 zeigt eine Vorderansicht auf Teile der Aufzugsanlage 1 nach Figur 1 bzw. 3, wobei aus Gründen der Übersichtlichkeit einzelne Komponenten nicht gezeichnet sind. In der Ausgestaltung nach Figur 3 sind die Führungsrollen 6 nicht vorhanden. Dabei ist derselbe Fahrkorb 2 mitsamt der zugehörigen Statoreinheit in zwei unterschiedlichen Positionen gezeigt, die während einer Fahrt eingenommen werden. In Figur 7 ist übertrieben eingezeichnet, dass Verlauf der Statorrahmen 8, welche die Führungsfläche 23 bilden, relativ zum Verlauf der Fahrkorbführungsschiene 14 entlang des Fahrwegs F krumm ausgebildet ist. Hier ist dies dargestellt durch einen krummen Verlauf der Führungsflächen 23 bzw. der Statorrahmen 8; alternativ oder zusätzlich kann der Verlauf der Fahrkorbführungsschienen 14 krumm sein. Ein krummer Verlauf kann bereits durch eine horizontale Relativabweichung zwischen Führungsfläche 23 und Fahrkorbführungsführungsschiene 14 bzw. Statorrahmen 8 und Läuferrahmen 9 von wenigen Millimetern gebildet sein, die sich, ohne entsprechenden Ausgleich an den Motoreinheiten, unmittelbar auf die Luftspaltbreite S auswirken würde. Auch eine einseitige Abnutzung der Fahrkorbführungsrollen 13 kann örtlich einen unvorteilhaften Versatz des Fahrkorbs 2 bedingen.

Der Läuferrahmen 9 folgt nun diesem krummen Verlauf der Führungsfläche 23 bzw. Statorrahmen 8, wodurch der Läuferrahmen 9 zum einen horizontal nach rechts (-y-Richtung) ausweicht und zum anderen eine leichte Kippbewegung um die Längsachse (x-Richtung) vollzieht. Der Läuferrahmen 9 kann sich dabei derart an dem Verlauf der Führungsfläche 23 bzw. Statorrahmen 8 ausrichten, so dass der Läufermagnet 22 zentriert zwischen den Statormagneten 21 angeordnet ist und damit die Luftspaltbreite S innerhalb eines vordefinierten Toleranzbereiches bleibt. Aufgrund der Lagerung über die Schiebegelenkeinheit 10 kann diese Verlagerung des Läuferrahmens 9 ohne Einfluss auf die Position des Fahrkorbs 2 durchgeführt werden; der Fahrkorb 2 folgt somit dem seitlichen Ausweichen des Läuferrahmens 9 nicht, sondern folgt vielmehr dem Verlauf der Fahrkorbführungsschienen 14, welcher in dieser Darstellung geradlinig dargestellt ist.

An der oberen Darstellung der Läufereinheit 5₁ ist zu erkennen, dass die Verschieberichtung V stets quer ausgerichtet ist zur Ausrichtung der Läufermagnete. Da die magnetische Kraft auf die Läufermagnete stets parallel zu deren Ausrichtung ist, wirken grundsätzlich keine Kraftkomponenten auf die Magnete in Richtung der Verschieberichtung V, d.h. ein Relativverschiebung der beiden Schiebeelemente 16, 17 zueinander wird in keiner Drehstellung des Drehgelenks Fall durch die Motoreinheit selbst veranlasst; dies wird erreicht, dass die Schiebeeinheit 11 zwischen dem Gelenkeinheit 12 und der Läufereinheit 5 angeordnet ist. Wäre hingegen die Gelenkeinheit 12 zwischen Schiebeeinheit 11 und Läufereinheit 5 angeordnet, wäre es bei entsprechender Auslenkung der Gelenkeinheit 12 möglich, dass die Motoranordnung eine Schiebekraft auf das erste Schiebeelement 16 ausübt, was wiederum einen nachteiligen Einfluss auf die Spaltbreite S hätte.

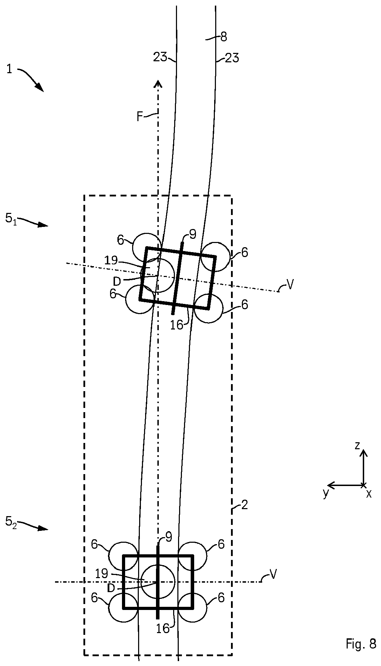

Figur 8 zeigt eine Vorderansicht auf Teile einer alternativen Aufzugsanlage. Am Fahrkorb 2 sind nun untereinander zwei voneinander separat am Fahrkorb 2 gelagerte Läufereinheiten 5₁, 5₂ vorgesehen. Jede Läufereinheit 5₁, 5₂ bildet gemeinsam mit der Statoreinheit 4 einen Linearmotor. Insofern kann die Aneinanderreihung der Statoreinheiten 4 Bestandteil mehreren Linearmotoren im Sinne der vorliegenden Erfindung sein. Aufgrund der schwimmenden Lagerung sind die Magnete optimal zueinander geführt; der Fahrkorb kann geradlinig im Aufzugsschacht geführt werden. Ansonsten gelten die Ausführungen zu Figur 7 gleichermaßen für die Figur 8.

In den Figuren 1 und 3 ist ferner eine Sensoranordnung 24, 25 gezeigt, mit der die Fahrweg-Position des Fahrkorbs 2 ermittelbar ist. Die Sensoranordnung umfasst eine codierte Sensorstrecke 25, die am Läuferrahmen 9 angebracht ist. Ferner umfasst die Sensoranordnung mehrere Positionssensoren in Form von einem oder mehreren Sensorbändern 24, welche entlang des Fahrweges F am Statorrahmen 8 angebracht sind und die unterschiedlichen, positionsindividuellen Markierungen (z.B. graphische Markierung, taktile Markierung oder Funkmarkierungen) der codierten Sensorstrecke 25 erfassen können und im Hinblick auf deren Position ausgewertet werden können. Anhand der Fahrwerg-Position kann insbesondere eine relative Ausrichtung der Läufermagnete 22 gegenüber den Statormagneten 21 in Fahrtrichtung (z-Richtung) ermittelt werden, was für die Regelung des Synchronmotors bedeutsam ist. Solche Sensoranordnungen erfordern die Einhaltung eines vordefinierten Abstandes zwischen den Sensormitteln, welcher durch die vorbeschriebenen Maßnahmen nun ebenfalls erreichbar ist.

### Bezugszeichenliste

- 1: Aufzugsanlage
- 2: Fahrkorb
- 3: Linearmotor
- 4: Statoreinheit
- 5: Läufereinheit
- 6: Läuferführungsrolle
- 7: Aufzugsschacht
- 8: Statorrahmen
- 9: Läuferrahmen
- 10: Schiebegelenkeinheit als Befestigungseinheit
- 11: Schiebeeinheit
- 12: Gelenkeinheit
- 13: Fahrkorbführungsrollen
- 14: Fahrkorbführungsschiene
- 15: Rollenträger
- 16: erstes Schiebeelement
- 17: zweites Schiebeelement
- 18: erstes Gelenkelement
- 19: zweites Gelenkelement
- 20: Steuereinheit
- 21: Statormagnet
- 22: Läufermagnet
- 23: Führungsflächen
- 24: Sensorband
- 25: Sensorstrecke
- 26: Abstandsmessgerät
- 27: Stellantrieb
- S: Luftspaltbreite
- D: Drehachse
- F: Fahrweg
- V: Verschieberichtung
- A: Abstand
- T: Stellgröße

## Patentansprüche

1. Aufzugsanlage (1), umfassend
zumindest einen Fahrkorb (2), der entlang eines Fahrweges (F) verfahrbar ist, eine Linearmotoranordnung, wobei die Linearmotoranordnung eingerichtet ist, den Fahrkorb (2) in Richtung des Fahrweges (F) anzutreiben,
die Linearmotoranordnung umfasst:
- eine Läufereinheit (5) mit zumindest einem Läufermagneten (22),
- eine Statoreinheit (4) mit mehreren entlang des Fahrweges (F) angeordneten Statormagneten (21),
- zumindest eine Befestigungseinheit (10) zur Antriebsverbindung der Läufereinheit (5) mit dem Fahrkorb (2),
wobei die Statormagneten (21) eingerichtet sind, ein in Richtung des Fahrweges (F) wanderndes Magnetfeld zu erzeugen, mit welchem der zumindest eine Läufermagnet (22) zum Zwecke des Antreibens der Läufereinheit (5) magnetisch beaufschlagbar ist,
wobei die Läufereinheit (5) durch die Befestigungseinheit (10) zumindest in Fahrtrichtung (z) betrachtet mit dem Fahrkorb (2) fest verbunden ist,
**dadurch gekennzeichnet,**
**dass** die Befestigungseinheit (10) derart ausgebildet ist, eine Relativbewegung zwischen der Läufereinheit (5) und dem Fahrkorb (2) in einer Richtung (x, y) quer zur Fahrtrichtung (F) zu ermöglichen.

2. Aufzugsanlage nach dem vorherigen Anspruch,
**dadurch gekennzeichnet,**
**dass** die Befestigungseinheit (10) eine Schiebeeinheit (11) umfasst, welche derart eingerichtet ist, dass über die Befestigungseinheit (10) die Läufereinheit (5) in Richtung des Fahrweges (F) fest aber quer zur Richtung des Fahrweges (F) beweglich mit dem Fahrkorb (2) verbunden ist.

3. Aufzugsanlage nach einem der vorherigen Ansprüche,
**dadurch gekennzeichnet,**
**dass** die Befestigungseinheit (10), insbesondere die Schiebeeinheit (11), derart ausgebildet ist, eine freie Bewegung der Läufereinheit (5) gegenüber dem Fahrkorb (2) in einer Verschieberichtung (V) zu ermöglichen, die im Wesentlichen senkrecht zur Fahrtrichtung (z) ausgerichtet ist.

4. Aufzugsanlage nach einem der vorherigen Ansprüche,
**dadurch gekennzeichnet,**
**dass** die Befestigungseinheit (10) eine Gelenkeinheit (12) umfasst, welche derart angeordnet ist, dass über die Befestigungseinheit (10) die Läufereinheit (5) drehbar mit dem Fahrkorb (2) verbunden ist,
insbesondere dass die Schiebeeinheit (11) zwischen der Gelenkeinheit (12) und der Läufereinheit (5) angeordnet ist.

5. Aufzugsanlage nach einem der vorherigen Ansprüche,
**dadurch gekennzeichnet,**
**dass** die Läufereinheit (5) einen Läuferrahmen (9) umfasst, welcher mittels Führungsmittel (6) gegenüber einem Statorrahmen (8) der Statoreinheit (4) geführt ist.

6. Aufzugsanlage nach einem der vorherigen Ansprüche,
**dadurch gekennzeichnet,**
**dass** ein Stellantrieb (27) zum definierten Einstellen der Relativbewegung zwischen der Läufereinheit (5) und dem Fahrkorb (2) in der Richtung (-x, x, y, -y) quer zur Fahrtrichtung (z) vorgesehen ist,
insbesondere dass eine Steuereinheit (20) zur Ansteuerung des Stellantriebs (27) vorgesehen ist, die Steuereinheit ist eingerichtet, eine Spaltbreite (S) zwischen einem der Läufermagnete (22) und einem der Statormagnete (21) entsprechend einem Vorgabewert einzuregeln,
insbesondere dass Sensormittel (26) zur Ermittlung einer Spaltbreite (S) zwischen einem der Läufermagnete (22) und einem der Statormagnete (21) vorgesehen sind.

7. Aufzugsanlage nach einem der vorherigen Ansprüche,
**dadurch gekennzeichnet,**
**dass** die Linearmotoranordnung Sensormittel (24, 25) zur Bestimmung der Position des zumindest einen Läufermagneten (22) entlang des Fahrweges (F) umfasst, wobei insbesondere eine Mehrzahl von ersten Sensormitteln (24) entlang des Fahrweges (F) an den Statoreinheiten (4) angebracht sind, und zumindest ein zweites Sensormittel (25) an der Läufereinheit (5) angebracht ist.

8. Aufzugsanlage (1) nach einem der vorherigen Ansprüche,
**dadurch gekennzeichnet,**
**dass** die Aufzugsanlange (1) eine Vielzahl, insbesondere mehr als zwei, Fahrkörbe (2) umfasst, die unabhängig voneinander auf dem gemeinsamen Fahrweg (F) verfahrbar sind.

9. Aufzugsanlage nach dem vorherigen Anspruch,
**dadurch gekennzeichnet,**
**dass** für jeden Fahrkorb (2) zumindest zwei Linearmotoranordnungen vorgesehen sind, wobei jede der Linearmotoranordnungen eine separate Befestigungseinheit (10) zur Befestigung der jeweiligen Läufereinheit (5) mit dem Fahrkorb (2) umfasst.

10. Aufzugsanlage nach einem der vorherigen Ansprüche,
**dadurch gekennzeichnet,**
**dass** der Fahrkorb (2) über eine Mehrzahl von Fahrkorbführungsrollen (13) gelagert ist,
wobei sämtliche Fahrkorbführungsrollen (13) auf einer gemeinsamen Seite des Fahrkorbs (2) angeordnet sind,
insbesondere, dass die Läufereinheit (5) auf derselben Seite des Fahrkorbs (2) angeordnet ist wie die Fahrkorbführungsrollen (13), insbesondere dass sämtliche einem Fahrkorb (2) zugeordneten Läufereinheiten (5) auf derselben Seite des Fahrkorbs (2) angeordnet sind wie die Fahrkorbführungsrollen (13).

## Claims

1. Lift installation (1), comprising
at least one lift cage (2) which is displaceable along a running track (F),
a linear motor assembly, wherein the linear motor assembly is suitable for driving the lift cage (2) in the direction of the running track (F),
the linear motor assembly comprises:
- a rotor unit (5) having at least one rotor magnet (22),
- a stator unit (4) having a plurality of stator magnets (21) disposed along the running track (F),
- at least one fastening unit (10) for the drive-related connection of the rotor unit (5) to the lift cage (2),
wherein the stator magnets (21) are adapted for generating a magnetic field which travels in the direction of the running track (F) and by way of which the at least one rotor magnet (22) for the purpose of driving the rotor unit (5) is magnetically impingeable,
wherein the rotor unit (5) by way of the fastening unit (10), at least when viewed in the running direction (z), is fixedly connected to the lift cage (2),
**characterized**
**in that** the fastening unit (10) is configured in such a manner that relative movement between the rotor unit (5) and the lift cage (2) is enabled in a direction (x, y) which is transverse to the running direction (F).

2. Lift installation according to the preceding claim,
**characterized**
**in that** the fastening unit (10) comprises a slider unit (11) which is adapted in such a manner that the rotor unit (5) by way of the fastening unit (10) in the direction of the running track (F) is connected to the lift cage (2) in a fixed manner yet so as to be movable in a manner transverse to the direction of the running track (F).

3. Lift installation according to either of the preceding claims,
**characterized**
**in that** the fastening unit (10), in particular the slider unit (11), is configured in such a manner so as to enable free movement of the rotor unit (5) in relation to the lift cage (2) in a displacement direction (V) which is aligned so as to be substantially perpendicular to the running direction (z) .

4. Lift installation according to one of the preceding claims,
**characterized**
**in that** the fastening unit (10) comprises an articulation unit (12) which is disposed in such a manner that the rotor unit (5) by way of the fastening unit (10) is rotatably connected to the lift cage (2),
in particular in that the slider unit (11) is disposed between the articulation unit (12) and the rotor unit (5).

5. Lift installation according to one of the preceding claims,
**characterized**
**in that** the rotor unit (5) comprises a rotor frame (9) which by means of guide means (6) is guided in relation to a stator frame (8) of the stator unit (4) .

6. Lift installation according to one of the preceding claims,
**characterized**
**in that** an actuator (27) for defined setting of the relative movement between the rotor unit (5) and the lift cage (2) in the direction (-x, x, y, -y) transverse to the running direction (z) is provided,
in particular in that a controller (20) for actuating the actuator (27) is provided, the controller being adapted for adjusting a gap spacing (S) between one of the rotor magnets (22) and one of the stator magnets (21) according to a predefined value,
in particular in that sensor means (26) for determining a gap spacing (S) between one of the rotor magnets (22) and one of the stator magnets (21) are provided.

7. Lift installation according to one of the preceding claims,
**characterized**
**in that** the linear motor assembly comprises sensor means (24, 25) for determining the position of the at least one rotor magnet (22) along the running track (F), wherein in particular a plurality of first sensor means (24) are attached to the stator units (4) along the running track (F), and at least one second sensor means (25) is attached to the rotor unit (5).

8. Lift installation (1) according to one of the preceding claims,
**characterized**
**in that** the lift installation (1) comprises a multiplicity, in particular more than two, lift cages (2) which are displaceable in a mutually independent manner on the common running track (F).

9. Lift installation according to the preceding claim,
**characterized**
**in that** at least two linear motor assemblies are provided for each lift cage (2), wherein each of the linear motor assemblies comprises a separate fastening unit (10) for fastening the respective rotor unit (5) to the lift cage (2).

10. Lift installation according to one of the preceding claims,
**characterized**
**in that** the lift cage (2) is mounted by way of a plurality of lift cage guide rollers (13), wherein all lift cage guide rollers (13) are disposed on one common side of the lift cage (2),
in particular in that the rotor unit (5) is disposed on the same side of the lift cage (2) as the lift cage guide rollers (13), in particular in that all rotor units (5) assigned to one lift cage (2) are disposed on the same side of the lift cage (2) as the lift cage guide rollers (13).

## Revendications

1. Installation d'ascenseur (1), comprenant au moins une cabine (2) qui peut être déplacée le long d'un chemin de déplacement (F),
un ensemble formant moteur linéaire, l'ensemble formant moteur linéaire étant conçu pour entraîner la cabine (2) dans la direction du chemin de déplacement (F), l'ensemble formant moteur linéaire comprenant :
- une unité formant rotor (5) munie d'au moins un aimant de rotor (22),
- une unité formant stator (4) munie d'une pluralité d'aimants de stator (21) disposés le long du chemin de déplacement (F),
- au moins une unité de fixation (10) destinée à relier en entraînement l'unité formant rotor (5) à la cabine (2),
les aimants de stator (21) étant conçus pour générer un champ magnétique qui est mobile dans la direction du chemin de déplacement (F) et auquel l'au moins un aimant de rotor (22) peut être soumis magnétiquement dans le but d'entraîner l'unité formant rotor (5),
l'unité formant rotor (5) étant reliée de manière fixe à la cabine (2) par le biais de l'unité de fixation (10) au moins dans la direction de déplacement (z), **caractérisée en ce que**
l'unité de fixation (10) est conçue de façon à permettre un mouvement relatif entre l'unité formant rotor (5) et la cabine (2) dans une direction (x, y) transversale à la direction de déplacement (F).

2. Installation d'ascenseur selon la revendication précédente,
**caractérisée en ce que**
l'unité de fixation (10) comprend une unité coulissante (11) qui est conçue de telle sorte que l'unité formant rotor (5) peut être reliée à la cabine (2) par le biais de l'unité de fixation (10) de manière fixe dans la direction du chemin de déplacement (F) mais de manière mobile transversalement à la direction du chemin de déplacement (F).

3. Installation d'ascenseur selon l'une des revendications précédentes,
**caractérisée en ce que**
l'unité de fixation (10), en particulier l'unité coulissante (11), est conçue de façon à permettre un déplacement libre de l'unité formant rotor (5) par rapport à la cabine (2) dans une direction de coulissement (V) qui est orientée sensiblement perpendiculairement à la direction de déplacement (z).

4. Installation d'ascenseur selon l'une des revendications précédentes,
**caractérisée en ce que**
l'unité de fixation (10) comprend une unité d'articulation (12) qui est disposée de telle sorte que l'unité formant rotor (5) est reliée de manière rotative à la cabine (2) par le biais de l'unité de fixation (10), en particulier **en ce que** l'unité coulissante (11) est disposée entre l'unité d'articulation (12) et l'unité formant rotor (5).

5. Installation d'ascenseur selon l'une des revendications précédentes,
**caractérisée en ce que**
l'unité formant rotor (5) comprend un cadre de rotor (9) qui est guidé à l'aide de moyens de guidage (6) par rapport à un cadre de stator (8) de l'unité formant stator (4) .

6. Installation d'ascenseur selon l'une des revendications précédentes,
**caractérisée en ce que**
un actionneur (27) est prévu pour effectuer le réglage défini du mouvement relatif entre l'unité formant rotor (5) et la cabine (2) dans la direction (-x, x, y, -y) transversale à la direction de déplacement (z),
en particulier **en ce qu'**une unité de commande (20) est prévue pour commander l'actionneur (27), l'unité de commande est conçue pour régler une largeur d'intervalle (S) entre l'un des aimants de rotor (22) et l'un des aimants du stator (21) selon une valeur par défaut,
en particulier **en ce que** des moyens de détection (26) sont prévus pour déterminer une largeur d'intervalle (S) entre l'un des aimants de rotor (22) et l'un des aimants de stator (21).

7. Installation d'ascenseur selon l'une des revendications précédentes,
**caractérisée en ce que**
l'ensemble formant moteur linéaire comprend des moyens de détection (24, 25) destinés à déterminer la position de l'au moins un aimant de rotor (22) le long du chemin de déplacement (F), en particulier une pluralité de premiers moyens de détection (24) étant fixés aux unités formant stator (4) le long du chemin de déplacement (F), et au moins un deuxième moyen de détection (25) étant fixé à l'unité formant rotor (5).

8. Installation d'ascenseur (1) selon l'une des revendications précédentes,
**caractérisée en ce que**
l'installation d'ascenseur (1) comprend une multitude de cabines (2), en particulier plus de deux, qui peuvent être déplacées indépendamment les unes des autres sur le chemin de déplacement commun (F).

9. Installation d'ascenseur selon la revendication précédente,
**caractérisée en ce que**
au moins deux ensembles formant moteur linéaire sont prévus pour chaque cabine (2), chacun des ensembles formant moteur linéaire comprenant une unité de fixation séparée (10) destinée à fixer l'unité formant rotor respective (5) à la cabine (2).

10. Installation d'ascenseur selon l'une des revendications précédentes,
**caractérisée en ce que**
la cabine (2) est supportée par une pluralité de rouleaux de guidage de cabine (13),
tous les rouleaux de guidage de cabine (13) étant disposés sur un côté commun de la cabine (2),
en particulier **en ce que** l'unité formant rotor (5) est disposée du même côté de la cabine (2) que les rouleaux de guidage de cabine (13), en particulier **en ce que** toutes les unités formant rotor (5) associées à une cabine (2) sont disposées du même côté de la cabine (2) que les rouleaux de guidage de cabine (13).
